# EUROPÄISCHE PATENTANMELDUNG

(11) **EP 4 474 133 A1**
(43) Veröffentlichungstag der Anmeldung: **11.12.2024**
(21) Anmeldenummer: 24166980.3
(22) Anmeldetag: 27.03.2024
(51) Int. Cl.: B29C 49/78

(54) **VERFAHREN UND VORRICHTUNG ZUM UMFORMEN VON KUNSTSTOFFVORFORMLINGEN ZU KUNSTSTOFFBEHÄLTNISSEN**

(30) Priorität: 06.06.2023 DE 102023114896
(71) Anmelder: Krones AG, 93073 Neutraubling (DE)
(72) Erfinder: Kulzer, Markus, 93073 Neutraubling (DE); Hengl, Benedikt, 93073 Neutraubling (DE); Vogler, Daniel, 93073 Neutraubling (DE)
(74) Vertreter: Bittner, Bernhard

(57) **Zusammenfassung**

Verfahren zum Umformen von Kunststoffvorformlingen zu Kunststoffbehältnissen (15) mittels wenigstens einer Vorrichtung zum Umformen von Kunststoffvorformlingen zu Kunststoffbehältnissen, wobei Kunststoffvorformlinge mit einem fließfähigen und insbesondere gasförmigen Medium beaufschlagt werden und so zu den Kunststoffbehältnissen umgeformt werden, wobei die Kunststoffvorformlinge mit unterschiedlichen Druckniveaus (p1, Pi, p2) beaufschlagt werden und das fließfähige Medium in wenigstens zwei Reservoirs gespeichert wird und von diesen Reservoirs den Kunststoffvorformlingen zugeführt wird, wobei wenigstens eines dieser Reservoirs von einer Druckbereitstellungseinrichtung (7) mit dem fließfähigen Medium versorgt wird und wobei zumindest zeitweise das fließfähige Medium von dem Kunststoffbehältnis in wenigstens eines dieser Reservoirs zurückgeführt wird, wobei ein Druck in wenigstens einem Reservoir geregelt wird, und wobei ein Solldruck mit einem Ist-Druck in diesem Reservoir verglichen wird, und ein für diesen Vergleich charakteristischer Wert ermittelt wird. Erfindungsgemäß werden auf Grundlage dieses charakteristischen Werts wenigstens eine erste Stellgröße und wenigstens eine zweite Stellgröße geregelt, wobei die wenigstens eine erste Stellgröße und die wenigstens zweite Stellgröße priorisiert geregelt werden.

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtung sind aus dem Stand der Technik seit langem bekannt. Dabei werden üblicherweise erwärmte Kunststoffvorformlinge mit einem fließfähigen Medium und insbesondere mit Druckluft expandiert und so zu Kunststoffbehältnissen und insbesondere Kunststoffflaschen umgeformt. Zu diesem Zweck werden üblicherweise Druckluftreservoirs wie beispielsweise Ringkanäle eingesetzt. Die Expansion der Kunststoffvorformlinge findet üblicherweise in mehreren Druckstufen statt, beginnend mit einem geringeren Anfangsdruck (P1) über einen erhöhten Zwischenblasdruck (PI) und einen noch höheren Fertigblasdruck (P2).

Die Druckniveaus der Blasluftreservoirs, beispielsweise Blasluftringkanäle und insbesondere der Reservoirs zum Vorblasen (P1) und Zwischenblasen (PI) werden im Stand der Technik mit festen Offsetwerten, d. h. Korrekturwerten beaufschlagt, um das Druckniveau in einem bestimmten Betriebszustand exakt zu erreichen. Dabei werden bevorzugt diese Korrekturwerte auf die Soll-Werte aufgeschlagen.

Im Stand der Technik tritt dabei teilweise das Problem auf, dass es bestimmte Betriebszustände gibt, in denen der Ist-Reservoirdruck beispielsweise ein Ist-Ringkanaldruck von einem Soll-Wert abweicht. Dies kann insbesondere bei niedrigen Druckniveaus (insbesondere bei Drücken kleiner als 6 bar) auftreten.

Weiterhin hängt der Korrekturwert teilweise auch von den verwendeten Vorformlingen oder anderen Parametern wie etwa BPHC (bottles per hour per cavity) und Druck ab. Damit ist der Korrekturwert jedoch in der Regel kein Sortenparameter. Dies bedeutet, dass der Korrekturwert nicht immer ideal für alle Betriebszustände und auch nicht alle Behältnisse ist.

Weiterhin kann im Regelbetrieb wertvolles Recyclingpotenzial ungenutzt bleiben. Der Luftverbrauch ist auf diese Weise oft deutlich höher als er sein könnte. In konkreten Beispielen wurden trotz korrekter Offseteinstellung Druckverbräuche erreicht, welche ca. 25 % höher waren als sie theoretisch sein könnten.

Der vorliegenden Erfindung liegt daher die Aufgabe zugrunde, derartige Vorrichtungen zum Umformen von Kunststoffvorformlingen zu Kunststoffbehältnissen effizienter zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen mittels wenigstens einer Vorrichtung zum Umformen von Kunststoffvorformlingen zu Kunststoffbehältnissen werden Kunststoffvorformlinge mit einem fließfähigen und insbesondere gasförmigen Medium, bevorzugt Druckluft, beaufschlagt und so zu den Kunststoffbehältnissen umgeformt. Hierbei werden die Kunststoffvorformlinge mit unterschiedlichen Druckniveaus beaufschlagt und das fließfähige Medium wird in wenigstens zwei Reservoirs und bevorzugt einer Vielzahl von Reservoirs, insbesondere Ringkanälen gespeichert und von diesen Reservoirs den Kunststoffvorformlingen zugeführt, wobei wenigstens eines dieser Reservoirs von einer Druckbereitstellungseinrichtung mit dem fließfähigen Medium versorgt wird und wobei zumindest zeitweise das fließfähige Medium von dem Kunststoffbehältnis in wenigstens eines dieser Reservoirs zurückgeführt wird.

Hierbei wird ein Druck in wenigstens einem Reservoir geregelt, wobei ein Solldruck mit einem Ist-Druck in diesem Reservoir verglichen wird, und ein für diesen Vergleich charakteristischer Wert ermittelt wird. Erfindungsgemäß werden auf Grundlage dieses charakteristischen Werts wenigstens eine erste Stellgröße und wenigstens eine zweite Stellgröße geregelt, wobei die wenigstens eine erste Stellgröße und die wenigstens zweite Stellgröße priorisiert geregelt werden.

In diesem Zusammenhang wird unter einer priorisierten Regelung verstanden, dass entweder die wenigstens eine erste Stellgröße bevorzugt vor der wenigstens einen zweiten Stellgröße geregelt wird oder umgekehrt, insbesondere in Abhängigkeit von weiteren Einflussfaktoren, wie weiter unten genauer beschrieben.

Bevorzugt handelt es sich bei dem zu regelnden Druck in dem wenigstens einen Reservoir um die Regelgröße eines Regelkreises. Bevorzugt handelt es sich bei dem Solldruck um eine Führungsgröße dieses Regelkreises. Bevorzugt handelt es sich bei dem Ist-Druck um einen Ist-Wert der Regelgröße. Bevorzugt entspricht der charakteristische Wert einer Regeldifferenz, insbesondere einer Abweichung des Ist-Werts der Regelgröße von der Führungsgröße. Vorteilhaft ist der für den Vergleich charakteristische Wert eine Differenz zwischen dem Ist-Druck und dem Solldruck oder ein Verhältnis zwischen dem Ist-Druck und dem Solldruck. Bevorzugt handelt es sich bei dem wenigstens einen Reservoir um einen Ringkanal und besonders bevorzugt ist eine Vielzahl an Reservoirs als Ringkanal ausgeführt.

Bevorzugt wird dabei auch der Druck des fließfähigen Mediums in dem Reservoir und/oder die Zuführung des fließfähigen Mediums von der Druckbereitstellungseinrichtung zu dem Reservoir geregelt und insbesondere in Abhängigkeit von einem Betriebszustand der Vorrichtung geregelt. Bevorzugt wird wenigstens zeitweise das fließfähige Medium von dem Behältnis in wenigstens ein Druckreservoir zurückgeführt (dieser Prozess wird im Weiteren auch als Recycling bezeichnet).

Unter einer Regelung des Drucks in dem wenigstens einen Reservoir wird dabei insbesondere verstanden, dass die Zufuhr des fließfähigen Mediums von der Druckbereitstellungeinrichtung zu dem Reservoir geregelt wird bzw. geregelt ist und/oder die Zufuhr des fließfähigen Mediums von einem fertig geblasenen Kunststoffbehältnis zu dem Reservoir (Rückführung von fließfähigen Medium, Recycling) geregelt wird bzw. geregelt ist.

Bei der Zuführung des fließfähigen Mediums in das wenigstens eine Reservoir wird typischerweise der Solldruck zumindest zeitweise nicht exakt erreicht. Hierbei sind prinzipiell zwei Situationen möglich, nämlich dass der Druck im Reservoir nach der Zuführung von fließfähigem Medium temporär höher als der Solldruck ist (man spricht von Überfüllung des Reservoirs) oder niedriger als der Solldruck ist (man spricht von Unterfüllung des Reservoirs). Im Folgenden werden für diese beiden Situationen die Begriffe Überfüllung und Unterfüllung bzw. unterfülltes oder überfülltes Reservoir verwendet.

Bevorzugt kann das wenigstens eine Reservoir, in welchem der Druck geregelt wird, zumindest temporär in einem unterfüllten Zustand oder einem überfüllten Zustand vorliegen. Bevorzugt ist bei einem unterfüllten Zustand der aktuelle Druck (Ist-Druck) geringer als ein Solldruck und besonders bevorzugt ist bei einem überfüllten Zustand der aktuelle Druck (Ist-Druck) höher als der Solldruck.

Typischerweise wird das fließfähige Medium, insbesondere Druckluft über eine Druckbereitstellungeinrichtung, beispielsweise einem ein- oder mehrstufigen Kompressor bereitgestellt und über eine bzw. mehrere Reduziereinrichtungen auf den jeweiligen Druck der Reservoirs reduziert. Bei der Druckbereitstellungseinrichtung kann es sich bevorzugt um einen Kompressor handeln, aber auch etwa um einen Druckanschluss in einer Werkshalle. Besonders bevorzugt wird die Zuführung des Drucks mittels einer Regeleinrichtung geregelt. Hierbei kann es sich beispielsweise um einen sogenannten Domdruckregler handeln.

Bei einem bevorzugten Verfahren ist das Regelziel die Minimierung der Druckdifferenz zwischen dem Ist-Wert des Drucks (Ist-Druck) und dem Solldruck und bevorzugt ein (möglichst) konstantes Druckniveau zu halten. Mit anderen Worten ist das Regelziel den Druck in dem wenigstens einen Reservoir konstant zu halten und das Ausmaß der Schwankungen beim (Wieder-)Einregeln möglichst gering und kurz zu halten.

Um den gewünschten Druck im Reservoir aufrechtzuerhalten, beispielsweise nachdem ein Teil des fließfähigen Mediums zur Umformung eines Kunststoffvorformlings zu einem Kunststoffbehältnis abgeführt wurde, ist es aus dem Stand der Technik bekannt auf den von der Druckbereitstellungseinrichtung bereitgestellten Druck einen Korrekturwert (Offsetwert) zu addieren, was eine Regelung des Drucks in dem Reservoir auf den gewünschten Druck (Sollwert) ermöglicht. Beispielsweise soll in dem Reservoir ein Druck von 10 bar erreicht werden und die Druckluftbereitstellungseinrichtung stellt das fließfähige Medium unter einem Druck von 10,2 bar bereit. Hierbei beträgt der Offsetwert 0,2 bar. Ein solcher Offsetwert wird im Stand der Technik typischerweise fest vorgegeben und ist nicht variabel bzw. anpassbar.

Aus dem internen Stand der Technik der Anmelderin, insbesondere aus der unveröffentlichten DE 10 2022 122 880 A1 ist es bekannt, einen solchen Offsetwert in Abhängigkeit einer Abweichung des Ist-Drucks von einem Soll-Druck zu regeln und als Stellgröße zur Regelung des Drucks in dem wenigstens einen Reservoir zu verwenden. Bei einer solchen Regelung wird allerdings ein Recyclen des fließfähigen Mediums nur unzureichend berücksichtigt und ein bestehendes Recyclingpotential nicht völlig ausgeschöpft.

Daher wird im Rahmen der vorliegenden Erfindung vorgeschlagen, den Druck in dem wenigstens einen Reservoir in Abhängigkeit von wenigstens zwei Stellgrößen zu regeln, nämlich durch die Anpassung des Offsetwerts (erste Stellgröße) und durch eine Anpassung einer Recyclingzeit (zweite Stellgröße), insbesondere in Abhängigkeit von einem Betriebszustand einer Vorrichtung zum Umformen von Kunststoffvorformlingen zu Kunststoffbehältnissen.

Bei einem vorteilhaften Verfahren handelt es sich bei der wenigstens einen ersten Stellgröße um einen Offsetwert eines Drucks, welcher auf den von der Druckbereitstellungseinrichtung und insbesondere auf den von einer Reduziereinrichtung bereitgestellten Druck addiert wird.

Vorteilhaft erfolgt eine Regelung des Drucks in dem wenigstens einen Reservoir in Abhängigkeit von einem Betriebszustand der Vorrichtung, wobei bevorzugt wenigstens zwei Betriebszustände und bevorzugt wenigstens drei Betriebszustände definiert werden.

Vorteilhaft erfolgt die Regelung der wenigstens einen ersten Stellgröße und/oder der wenigstens einen zweiten Stellgröße in Abhängigkeit von einem vorgegebenen Betriebszustand der Vorrichtung erfolgt, wobei wenigstens zwei und bevorzugt wenigstens drei Betriebszustände der Vorrichtung vorgegeben sind und wobei in wenigstens einem vorgegebenen Betriebszustand der Vorrichtung die Regelung der wenigstens einen ersten Stellgröße und/oder der wenigstens einen zweiten Stellgröße priorisiert erfolgt.

Bevorzugt erfolgt eine Regelung des Drucks in dem wenigstens einen Reservoir in Abhängigkeit von dem Betriebszustand. Bevorzugt ist ein erster Betriebszustand vorgesehen, in welchem noch keine Produktion von Kunststoffbehältnissen erfolgt. Hierbei kann es sich bevorzugt um einen Standby-Modus bzw. Standby-Zustand handeln, in welchem kein fließfähiges Medium aus dem wenigstens einen Reservoir entnommen wird. Beispielsweise liegt eine Situation vor, in der die Vorrichtung belüftet wird, der letzte Blasvorgang ausgeführt wurde und/oder die Anlage im Standby weiterdreht ohne dass weitere Behältnisse produziert werden.

Bevorzugt erfolgt in dem ersten Betriebszustand eine Regelung des Drucks in dem wenigstens einen Reservoir einseitig, insbesondere durch eine einseitige Annäherung an den Solldruck ausgehend von einem geringeren Druck als dem Solldruck. Mit anderen Worten erfolgt eine Regelung des Drucks durch Variation der ersten Stellgröße (Offsetwert) nur "von unten". Wird das Reservoir zunächst unterfüllt erfolgt eine Anpassung der ersten Stellgröße, beispielsweise wird der Offsetwert um 0,2 bar erhöht. Bevorzugt erfolgt eine Anpassung der wenigstens einen ersten Stellgröße intervallmäßig, bevorzugt in einem vorgegeben bzw. vorgebbaren Zeitintervall. Hierbei ist es beispielsweise denkbar, dass eine Anpassung alle 10s erfolgt.

Wird das Reservoir überfüllt, kann beispielsweise die wenigstens eine erste Stellgröße einmalig um einen bestimmten Wert, beispielsweise um 0,2 bar abgesenkt werden und das überschüssige fließfähige Medium über eine freie Blasdüse abgegeben werden. Anschließend kann sich der Drucke erneut von unten her einregeln. Bevorzugt erfolgt in dem ersten Betriebszustand die Regelung des Drucks in dem wenigstens einen Reservoir einstufig (nur eine Stellgröße).

Bevorzugt ist ein zweiter Betriebszustand vorgesehen, in welchem die Produktion von Kunststoffbehältnissen anläuft. Bevorzugt erfolgt die Regelung des Drucks in dem wenigstens einem Reservoir in dem zweiten Betriebszustand einstufig, bevorzugt über einer PID-Regler.

Bevorzugt werden in dem zweiten Betriebszustand wenigstens ein und bevorzugt mehrere Reservoirs, welche das fließfähige Medium unter einem oder mehreren Zwischenblasdrücken speichern (PI-Kanäle), sukzessive befüllt, während für den eigentlichen Blasvorgang nur fließfähiges Medium unter einem Vorblasdruck (P1) und unter einem Fertigblasdruck (P2) verwendet wird. Bevorzugt erfolgt eine Befüllung der PI-Kanäle durch eine Rückführung des fließfähigen Mediums (Recycling). Die Produktion kann hier ohne ein Druckluftrecycling oder ohne sogenannte "air wizards (AW)" beginnen.

Bevorzugt weist der zweite Betriebszustand mehrere Phasen auf, insbesondere in Abhängigkeit von einem Grad der Befüllung der PI-Kanäle. Bevorzugt werden in einer ersten Phase die PI-Kanäle befüllt. Bevorzugt liegt eine zweite Phase vor solange das Druckniveau in den PI-Kanälen noch kein konstantes Level erreicht haben. Sobald das Druckniveau der Pl-Kanäle konstant ist, können diese beim Druckaufbau zugeschaltet werden. Mit anderen Worten erfolgt nun ein Blasvorgang durch das Zuführen von fließfähigem Medium unter dem Vorblasdruck (P1), unter wenigstens einem Zwischenblasdruck (PI) und dem Fertigblasdruck (P2).

Sobald die Druckverhältnisse in den Reservoirs mit dem fließfähigen Medium unter einem bzw. mehreren Zwischenblasdrücken stabil sind und ein verbleibender Druck in wenigstens einem Zwischenblaskanal (Pi1) ausreichend hoch ist (Druck größer als P1) (Phase 3), kann ein Recyclen in ein Reservoir unter einem Vorblasdruck (P1) erfolgen und von der dritten Phase in den dritten Betriebszustand gewechselt werden.

Bevorzugt ist ein dritter Betriebszustand vorgesehen, in welchem eine Regelung des Drucks in dem wenigstens einen Reservoir auf Grundlage der wenigstens einen ersten Stellgröße und der wenigstens einen zweiten Stellgröße erfolgt, beispielsweise durch einen AirWizard. Bevorzugt erfolgt in einem dritten Betriebszustand die Regelung des Drucks in dem wenigstens einen Reservoir zweistufig. Bei dem dritten Betriebszustand handelt es sich bevorzugt um einen Arbeitszustand, insbesondere um einen Zustand der Vorrichtung, in welchem eine konstante Produktion von Behältnissen erfolgt.

Bei einem bevorzugten Verfahren erfolgt eine Regelung des Drucks in dem wenigstens einen Reservoir auf Grundlage der wenigstens einen ersten Stellgröße (Offsetwert) und der wenigstens einen zweiten Stellgröße. Bei einem vorteilhaften Verfahren handelt es sich bei der wenigstens einen zweiten Stellgröße um eine Zeit, insbesondere eine Recyclingzeit, innerhalb welcher das fließfähige Medium von dem Kunststoffbehältnis in wenigstens eines dieser Reservoirs zurückgeführt wird.

Bevorzugt ist wenigstens ein erstes Stellglied vorgesehen, welches der wenigstens einen ersten Stellgröße zugeordnet ist. Bevorzugt handelt es sich bei dem wenigstens einen ersten Stellglied um ein Ventil der Druckbereitstellungseinrichtung, insbesondere der Reduziereinrichtung und besonders bevorzugt handelt es sich dabei um ein Proportionalventil eines Domdruckreglers. Vorteilhaft wird der Druck dem wenigstens einen Reservoir mittels eines Domdruckreglers geregelt.

Bevorzugt ist wenigstens ein zweites Stellglied vorgesehen, welches der wenigstens einen zweiten Stellgröße zugeordnet ist. Bevorzugt handelt es sich bei dem wenigstens einen zweiten Stellglied um ein Ventil und insbesondere um ein Proportionalventil, welches während der Rückführung des fließfähigen Mediums (Recycling) geöffnet ist. Bevorzugt handelt es sich hierbei um ein Ventil einer Ventilanordnung einer Umformungsstation und besonders bevorzugt um ein Ventil an einer Blasdüse.

In einem bevorzugten Verfahren wird die wenigstens eine erste Stellgröße (Offsetwert) in den jeweiligen Betriebszuständen derart geregelt, dass der Soll-Druck in dem wenigstens einen Reservoir über alle Betriebszustände hinweg erreicht wird und ein konstanter Druck vorliegt. Unter konstant wird dabei verstanden, dass Abweichungen über die Zeit geringer als 20%, bevorzugt geringer als 15%, bevorzugt geringer als 10%, bevorzugt geringer als 5% und besonders bevorzugt geringer als 3% sind.

Bei einem vorteilhaften Verfahren wird der Ist-Druck mittels einer Druckmesseinrichtung gemessen und insbesondere einer in dem wenigstens einen Reservoir angeordneten Druckmesseinrichtung. Bevorzugt wird der Ist-Druck kontinuierlich gemessen. Denkbar wäre allerdings auch den Ist-Druck zeitweise, beispielsweise in vorgegebenen Zeitabständen zu messen. Auch eine Druckmessung in einer Verbindungsleitung zu dem Reservoir wäre denkbar oder mehrere verteilte Druckmesseinrichtungen.

Bevorzugt erfolgt eine Regelung des Drucks in dem wenigstens einen Reservoir in Abhängigkeit von einem Offsetwert (erste Stellgröße) und in Abhängigkeit von einer Recyclingzeit (zweite Stellgröße). Bevorzugt erfolgt die Regelung über einen zweistufigen Regler bzw. in einem zweistufigen Regelkreis. Eine vorteilhafte Ausführungsform wird weiter unten in Bezug auf die beigefügten Figuren genauer beschrieben.

Bei einem vorteilhaften Verfahren werden bei der Regelung der wenigstens einen ersten Stellgröße ein aktueller Offsetwert und/oder ein unterer und/oder ein oberer Grenzwert des Offsetwerts berücksichtigt. Hierbei ist es denkbar, dass ein beliebiger Offsetwert zwischen zwei Grenzwerten insbesondere automatisch ausgewählt werden kann, wobei diese Grenzwerte vorgegeben bzw. vorgebbar sind und/oder von einem Bediener der Vorrichtung einggebbar sind.

Bei einem bevorzugten Verfahren werden eine aktuelle Recyclingzeit und bevorzugt eine maximal mögliche Recyclingzeit ermittelt. Unter einer Recyclingzeit wird hierbei die Zeit verstanden, in welcher ein Ventil zur Rückführung des fließfähigen Mediums aus der Umformungseinrichtung bzw. aus dem fertig geblasenen Kunststoffbehältnis in das wenigstens eine Reservoir geöffnet ist. Bevorzugt handelt es sich hierbei um ein Recyclen in das Reservoir unter dem Vorblasdruck (P1) und besonders bevorzugt handelt es sich bei diesem (Recycling-)Ventil um ein Proportionalventil. Bei einem vorteilhaften Verfahren werden bei der Regelung der wenigstens einen zweiten Stellgröße eine aktuelle Recyclingzeit und/oder eine maximale Recyclingzeit berücksichtigt.

Bevorzugt handelt es sich bei der maximalen Recyclingzeit um einen vorgegebenen und/oder vorgebbaren Wert und insbesondere ist dieser Wert bevorzugt durch einen Betreiber/Bediener der Anlage und/oder einem Hersteller der Anlage anpassbar und/oder veränderbar. Bevorzugt ist auch eine minimale Recyclingzeit vorgegeben bzw. vorgebbar. Bei einem bevorzugten Verfahren entspricht die zweite Stellgröße der Recyclingzeit und bevorzugt liegt die zweite Stellgröße betragsmäßig zwischen der minimalen und der maximalen Recyclingzeit.

Bevorzugt kann das wenigstens eine Reservoir zumindest zeitweise in einem überfüllten Zustand oder in einem unterfüllten Zustand vorliegen. Bevorzugt wird die wenigstens eine erste Stellgröße und/oder die wenigstens eine zweite Stellgröße in Abhängigkeit von einem Zustand des wenigstens einen Reservoirs geregelt. Bei einem vorteilhaften Verfahren werden die wenigstens eine erste Stellgröße und die wenigstens eine zweite Stellgröße in Abhängigkeit voneinander geregelt und/oder sind abhängig voneinander.

Bei einem vorteilhaften Verfahren werden die wenigstens eine erste Stellgröße und die wenigstens eine zweite Stellgröße priorisiert geregelt. Bei einer vorteilhaften Ausführungsform erfolgt die priorisierte Regelung der wenigstens einen ersten Stellgröße und der wenigstens einen zweiten Stellgröße in Abhängigkeit von einem Ist-Druck in diesem Reservoir. Vorteilhaft wird die wenigstens eine erste Stellgröße priorisiert geregelt sobald der Ist-Druck in diesem Reservoir geringer als der Solldruck und/oder die wenigstens eine zweite Stellgröße priorisiert geregelt wird sobald der Ist-Druck in diesem Reservoir größer als der Solldruck ist.

Bei einem vorteilhaften Verfahren wird ein Ergebnis der priorisierten Regelung der wenigstens einen ersten Stellgröße und/oder der wenigstens einen zweiten Stellgröße bewertet, wobei es sich bevorzugt bei dem Ergebnis um eine Auswirkung der Regelung auf den Ist-Druck in diesem Reservoir handelt. Mit anderen Worten kann bewertet bzw. ausgewertet werden, wie gut sich ein vorgenommener Regeleingriff (Regelung der wenigstens einen ersten Stellgröße und/oder Regelung der wenigstens einen zweiten Stellgröße) auf den aktuellen Druck im Reservoir (Ist-Druck) auswirkt. Hierbei ist es denkbar, dass ein solches Ergebnis bzw. die Bewertung eines solchen Ergebnisses an den Bediener der Vorrichtung ausgegeben werden kann und/oder zur Steuerung und/oder Regelung der Vorrichtung herangezogen werden kann.

Aus dem internen Stand der Technik der Anmelderin ist bekannt, dass es bei einem Wechsel von einem Betrieb ohne Recycling (gemäß dem zweiten Betriebszustand) auf einen Betrieb mit Recycling (gemäß dem dritten Betriebszustand) erforderlich ist, dass sich die Luftrückgewinnung zuerst einregelt. Hierbei greifen sowohl ein Regelkreis der Druckbereitstellungseinrichtung als auch ein Regelkreis des Recyclings auf die gleiche Messgröße zu (den Ist-Druck in dem Druckreservoir), wobei bevorzugt eines der beiden Stellglieder gesteuert wird. Hierbei wird bevorzugt das Proportionalventil der Druckbereitstellungseinrichtung verwendet.

Beim Übergang in den Recyclingbetrieb wird beispielsweise die aktuelle erste Stellgröße des Proportionalventils (Offsetwert) um einen vorgegebenen Wert, beispielsweise -0,3 bar (bevorzugt einem Wert zwischen -0,1 und -0,8) gesteuert und bevorzugt nach unten gesteuert. Infolgedessen fällt der Ringkanaldruck leicht ab. Ein Recyclingregler wird bevorzugt aktiv und reagiert insbesondere unmittelbar mit einem Anstieg der Recyclingdauer.

Ein Ringkanaldruck gleicht sich bevorzugt wieder auf Soll-Druckniveau an. Dieser Vorgang wird dann bevorzugt mehrmals wiederholt, und zwar insbesondere so lange, bis die Absenkung des Proportionalventils ein- bis zweimal in Folge zu keinem weiteren Druckeinbruch mehr geführt hat.

Dieses Vorgehen lässt jedoch keinen Rückschluss darauf zu, ob ein Recyclingpotential bereits voll ausgeschöpft ist oder wodurch eine Unter- oder Überfüllung des Reservoirs verursacht wird.

Daher wird im Rahmen der vorliegenden Erfindung vorgeschlagen, die beiden Regelkreise zu vereinen, um die Regelung des Drucks zu verbessern und ein Recyclingpotential noch besser ausschöpfen zu können. Eine Übersicht über einen solchen gekoppelten Regelkreis ist in Figur 4 dargestellt und wird weiter unten ausführlich beschrieben.

Hierbei ist zu unterscheiden, ob ein temporär unterfülltes oder überfülltes Reservoir vorliegt. Zunächst wird die Situation eines unterfüllten Reservoirs beschrieben. Ergibt die Messung des Drucks eine Unterfüllung des Reservoirs so wird bevorzugt in einem Schritt ermittelt, ob eine maximale Recyclingzeit bereits eingestellt ist. Ist dies der Fall kann der Betreiber der Anlage darüber informiert werden und gegebenenfalls auch darüber, ob der Wert der maximalen Recyclingzeit (manuell) erhöht werden könnte/sollte. Um den Druck wieder anzuheben, reagiert das System mit einer Erhöhung des Offsetwerts (erste Stellgröße). Wird hingegen festgestellt, dass die Recyclingzeit noch nicht maximal ist, so kann diese um einen gewissen Betrag erhöht werden, beispielsweise um 1 ms. Führt diese Anpassung zu einem Druckanstieg (Δ bar pro Δ Zeit), so war noch Recyclingpotential vorhanden und der Regelkreis kann von vorne beginnen. Ist aber kein Druckanstieg hier erkennbar, so ist das Recyclingpotential erschöpft und der Offsetwert wird wieder erhöht.

Ergibt die Messung des Drucks eine Überfüllung des Reservoirs so wird zunächst der Offset um einen gewissen Betrag abgesenkt. Führt dies zu einem Druckabfall (Δ bar pro Δ Zeit) bedeutet dies, dass das Reservoir durch die Druckbereitstellungseinrichtung gespeist wird und der Regelkreis kann von vorne beginnen. Wird hingegen kein Druckabfall registriert bedeutet dies, dass keine Druckluft über die Druckbereitstellungseinrichtung nachgeliefert wird, aber die Recyclingzeit zu lang ist. Daher wird der Offset um denselben Wert wieder erhöht und in einem weiteren Schritt die Recyclingzeit verringert und der Regelkreis von vorne gestartet.

Dieser zweitstufige Regelkreis und vor allem das ineinandergreifen der ursprünglich getrennten Regelkreise bietet den Vorteil, dass das maximale Recyclingpotential maximal ausgenutzt werden kann und der Verbrauch an fließfähigem Medium insgesamt reduziert werden kann.

Bevorzugt werden diese ermittelten und insbesondere optimierten Offsetwerte (erste Stellgröße) und/oder die ermittelten und insbesondere optimierten Recyclingzeiten (zweite Stellgröße) als nicht editierbare Sortenparamater auf einer Speichereinrichtung abgelegt und bevorzugt können diese Werte als Startwerte erneut geladen werden. Dies bietet den Vorteil, dass eine Einlernphase weitestgehend entfällt bzw. erst wieder erforderlich wird, wenn signifikante Prozessparameter verändert werden.

Besonders bevorzugt wird der Druck im Reservoir mittels eines sogenannten Domdruckreglers geregelt. Dieser kann dabei zwischen der Druckbereitstellungseinrichtung und dem jeweiligen Druckreservoir geschalten sein. Bei einer bevorzugten Ausführungsform wird das fließfähige Medium mittels einer Verteileinrichtung und insbesondere mittels eines Drehverteilers an das oder die Druckreservoirs verteilt und/oder diese damit beaufschlagt.

Besonders bevorzugt wird wenigstens zeitweise ein Anteil des fließfähigen Mediums von einem Reservoir und/oder dem zu expandierenden Behältnis in ein anderes (Druck-) Reservoir recycelt bzw. in dieses (zurück)geführt. Besonders bevorzugt gibt es mehrere Reservoirs und in diesem Betriebszustand findet ein Recycling statt.

Bei einem vorteilhaften Verfahren wird die Druckbereitstellungseinrichtung hinsichtlich der Höhe des von ihr ausgegebenen Druckes gesteuert und/oder der von der Druckbereitstellungseinrichtung bereitgestellte Druck wird von einer Reduzierstation auf den jeweiligen Reservoirdruck reduziert.

Die vorliegende Erfindung ist weiterhin auf eine Vorrichtung zum Umformen von Kunststoffvorformlingen zu Kunststoffbehältnissen mit wenigstens eine Umformungsstation gerichtet, welche mittels einer Beaufschlagungseinrichtung Kunststoffvorformlinge mit einem fließfähigen und insbesondere gasförmigen Medium, bevorzugt mit Druckluft beaufschlagt und diese so zu den Kunststoffbehältnissen umformt. Weiterhin beaufschlagt die Umformungsstation die Kunststoffvorformlinge mit unterschiedlichen Druckniveaus, wobei die Vorrichtung wenigstens ein erstes Reservoir zum Speichern des fließfähigen Mediums unter einem ersten Druck und ein zweites Reservoir zum Speichern des fließfähigen Mediums unter einem zweiten Druck aufweist und wenigstens eine Zuführeinrichtung vorgesehen ist, welche das fließfähige Medium von diesen Reservoirs den Kunststoffvorformlingen zuführt und zumindest zeitweise das fließfähige Medium von den Kunststoffbehältnissen in wenigstens eines dieser Reservoirs zurückführt.

Weiterhin ist eine Druckbereitstellungseinrichtung vorgesehen, welche wenigstens eines dieser Reservoirs mit dem fließfähigen Medium versorgt, wobei der Druck in wenigstens einem Reservoir regelbar ist, und wobei ein Solldruck mit einem Ist-Druck in diesem Reservoir vergleichbar ist, und ein für diesen Vergleich charakteristischer Wert ermittelbar ist.

Erfindungsgemäß ist der von der Druckbereitstellungseinrichtung ausgegebene Druck steuerbar und/oder die Vorrichtung eine Reduzierstation aufweist, welche den von der Druckbereitstellungseinrichtung an dieses Reservoir zugeführten Druck regelt.

Bevorzugt kann die Vorrichtung auch eine Steuerungseinrichtung aufweisen, welche den von der Druckbereitstellungseinrichtung an dieses Reservoir zugeführten Druck und/oder die Zuführung des fließfähigen Mediums von der Druckbereitstellungseinrichtung zu dem Reservoir regelt und/oder die Rückführung des fließfähigen Mediums von dem Kunststoffbehältnis zu dem wenigstens einen Reservoir. Insbesondere ist diese Steuerungseinrichtung dazu geeignet und bestimmt, das erste Reservoir mit dem ersten Druck bzw. den Druck zu dem ersten Reservoir, in dem der geringste Druck gespeichert wird, zu steuern und/oder zu regeln. Bevorzugt ist die Steuerungseinrichtung dazu geeignet und bestimmt einen Druck auf Grundlage der ersten Stellgröße und/oder der zweiten Stellgröße zu regeln.

Bevorzugt weist die Vorrichtung einen bewegbaren und insbesondere einen drehbaren Träger auf. Besonders bevorzugt sind an diesem Träger mehrere Umformungsstationen angeordnet. Diese weisen bevorzugt jeweils Blasformen auf, innerhalb deren die Umformung erfolgt.

Besonders bevorzugt ist jeder Umformungsstation eine Ventileinrichtung und insbesondere ein Ventilblock zugeordnet, der wiederum eine Vielzahl von Ventilen aufweist, um die Kunststoffvorformlinge mit unterschiedlichen Drücken zu beaufschlagen. Bevorzugt ist auch jeder Umformungsstation eine Reckstange zugeordnet, welche in die Kunststoffvorformlinge einführbar ist, um diese in ihrer Längsrichtung zu dehnen. Bevorzugt sind mehrere Zuführleitungen vorgesehen, welche mehrere Reservoirs mit den Umformungsstationen und insbesondere mit den Ventileinrichtungen verbinden.

Besonders bevorzugt ist eine Verteileinrichtung vorgesehen, welche das von der Druckbereitstellungseinrichtung zur Verfügung gestellte fließfähige Medium auf die einzelnen Reservoirs und so letztlich auch auf die einzelnen Umformungsstationen verteilt. Besonders bevorzugt ist die Druckbereitstellungseinrichtung stationär ausgeführt.

Bei einer vorteilhaften Ausführungsform weist die Vorrichtung und insbesondere dir Druckbereitstellungseinrichtung wenigstens ein erstes Stellglied auf, welche wenigstens eine erste Stellgröße ausgibt, wobei es sich bei dem wenigstens einen ersten Stellglied um einen Domdruckdruckregler der Reduzierstation und insbesondere um ein Proportionalventil des Domdruckreglers und/oder der Reduzierstation handelt und wobei es sich bei der wenigstens einen ersten Stellgröße um einen von der Reduzierstation bereitgestellten Druck (Steuerdruck, bevorzugt Versteuerung für den Domdruckregler) des fließfähigen Mediums handelt.

Bei einer vorteilhaften Ausführungsform weist die Vorrichtung wenigstens ein zweites Stellglied auf, welches wenigstens eine zweite Stellgröße ausgibt, wobei es sich bei dem wenigstens einen zweiten Stellglied um ein Ventil der Ventilanordnung der Umformungsstation handelt und wobei es sich bei der wenigstens einen zweiten Stellgröße um eine Zeit, insbesondere eine Recyclingzeit handelt, innerhalb welcher das fließfähige Medium aus dem Kunststoffbehältnis in wenigstens eines dieser Reservoirs zurückgeführt wird.

Besonders bevorzugt weist die Vorrichtung noch wenigstens ein drittes Druckreservoir und bevorzugt auch wenigstens ein viertes Druckreservoir auf. Besonders bevorzugt ist wenigstens eines dieser Druckreservoirs und sind bevorzugt mehrere Druckreservoirs als Ringkanäle ausgeführt, die insbesondere an dem oben erwähnten, drehbaren Träger angeordnet sind.

Besonders bevorzugt steuert und insbesondere regelt die Steuerungseinrichtung den an das Reservoir zugeführten Druck in Abhängigkeit von einem Betriebszustand der Vorrichtung.

Besonders bevorzugt ist wenigstens zeitweise das fließfähige Medium von dem zu expandierenden Behältnis oder einem zweiten Reservoir zu dem ersten Reservoir (rück)führbar. Auf diese Weise kann ein Druckluftluftrecycling erfolgen. Besonders bevorzugt sind zur Durchführung dieses Recyclings wenigstens ein und bevorzugt eine Vielzahl von Ventilen vorgesehen.

Bei einer vorteilhaften Ausführungsform weist die Umformungsstation eine Ventilanordnung mit einer Vielzahl von Ventilen auf, um die Behältnisse mit den unterschiedlichen Druckstufen zu beaufschlagen. Besonders bevorzugt ist wenigstens eines dieser Ventile ein Proportionalventil.

Besonders bevorzugt weist die Vorrichtung wenigstens eine Sensoreinrichtung und insbesondere eine Druckmesseinrichtung auf, welche wenigstens einem Druckreservoir zugeordnet ist. Besonders bevorzugt ist diese Sensoreinrichtung dazu geeignet und bestimmt einen Druck innerhalb des Reservoirs kontinuierlich zu bestimmen. Bei einer weiteren vorteilhaften Ausführungsform weist die Vorrichtung auch eine Sensoreinrichtung auf, welche den von der Druckbereitstellungseinrichtung zur Verfügung gestellten Druck erfasst und besonders bevorzugt kontinuierlich erfasst.

Besonders bevorzugt ist die Steuerungseinrichtung dazu geeignet, den Druck unter Berücksichtigung eines Soll-Drucks zu regeln und bevorzugt diesem Soll-Druck mit einem Offsetdruck und insbesondere einem variablen Offsetdruck (erste Stellgröße) aufzuaddieren und/oder durch Anpassung der Recyclingzeit zu regeln.

Bei einer vorteilhaften Ausführungsform weist die Vorrichtung eine Vergleichseinrichtung auf, welche dazu geeignet ist, einen Soll-Druck in einem Reservoir mit einem Ist-Druck in diesem Reservoir zu vergleichen und einen für diesen Vergleich charakteristischen Wert auszugeben und bevorzugt eine Regeleinrichtung den Druck in diesem Reservoir basierend auf diesem charakteristischen Wert regelt. Besonders bevorzugt wird dabei der Offset (erste Stellgröße) derart geregelt, so dass der Druck in dem Reservoir konstant ist.

Weitere Vorteile und Ausführungsformen ergeben sich aus den beigefügten Zeichnungen:

### Darin zeigen:

- Fig. 1: eine schematische Darstellung einer erfindungsgemäßen Vorrichtung;
- Fig. 2a, b: eine Übersicht der Betriebsmodi gemäß wenigstens einer Ausführungsform des erfindungsgemäßen Verfahrens;
- Fig. 3: eine schematische Darstellung einer Ausführungsform des erfindungsgemäßen Verfahrens.

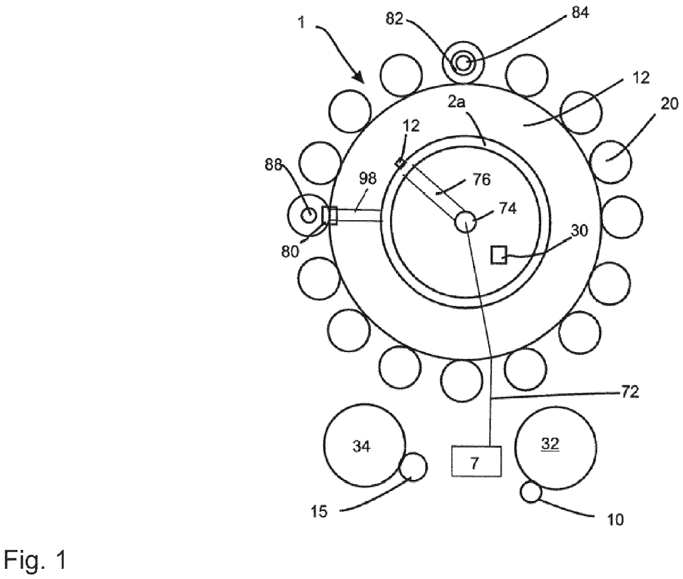

Fig. 1 zeigt eine Vorrichtung 1 zum Umformen von Kunststoffvorformlingen 10 zu Kunststoffbehältnissen 15. Diese Vorrichtung weist einen drehbaren Träger 12 auf, an dem eine Vielzahl von Umformungsstationen 20 angeordnet ist. Diese einzelnen Umformungsstationen weisen jeweils Blasformen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Das Bezugszeichen 80 kennzeichnet eine Ventilanordnung wie einen Ventilblock, der eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine erste Transporteinrichtung 32 wie insbesondere aber nicht ausschließlich einen Transportstern der Vorrichtung zugeführt. Über eine zweite Transporteinrichtung 34 werden die Kunststoffbehältnisse 15 abtransportiert.

Das Bezugszeichen 7 kennzeichnet eine Druckbereitstellungseinrichtung wie etwa einen Kompressor oder auch ein Druckluftanschluss. Die Druckluft wird über eine Verbindungsleitung 72 und eine Reduziereinrichtung 30 zu einem Drehverteiler 74 gefördert und von diesem über eine weitere Leitung 76 an das Reservoir 2a angegeben, bei dem es sich hier um einen Ringkanal handelt.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 20 bzw. deren Ventilblock 80 abgibt. Bevorzugt ist jeder der Ringkanäle über entsprechende Verbindungsleitungen mit sämtlichen Umformungsstationen verbunden.

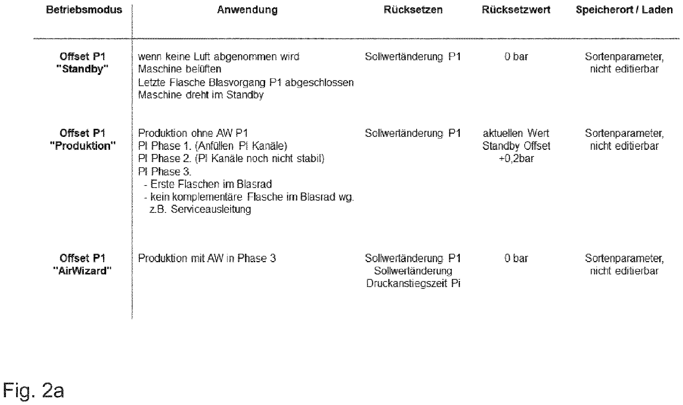

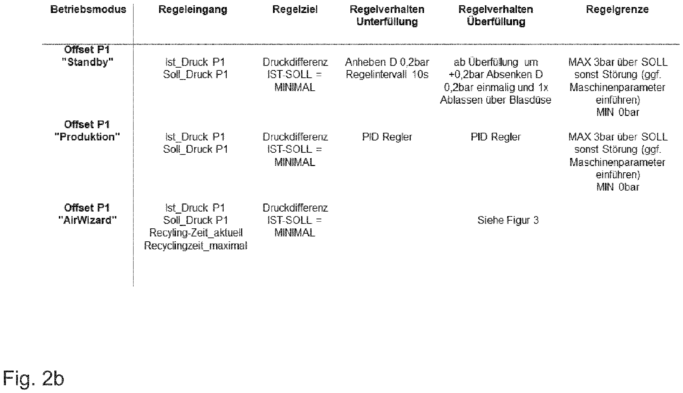

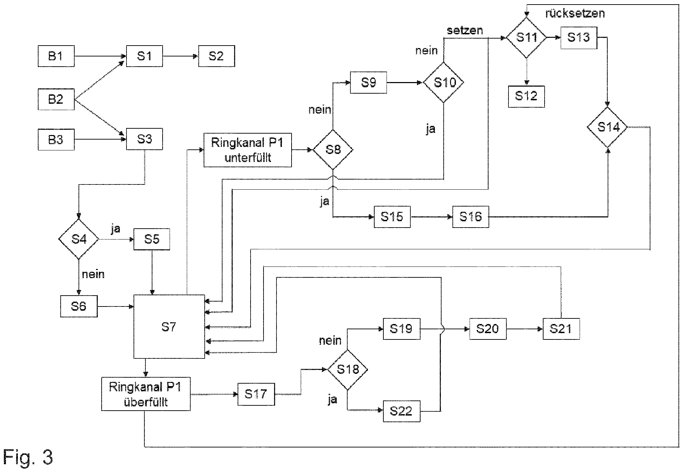

In den Figuren 2a und 2b ist eine Übersicht über drei Betriebszustände der vorliegenden Erfindung sowie über die Regelung der Druckverhältnisse gezeigt. Nachfolgend (auf für Figur 3) werden alle Zusammenhänge exemplarisch für ein Druckreservoir bzw. einen Ringkanal unter einem Vorblasdruck P1 beschrieben. Es sei angemerkt, dass diese Beschreibung keine Einschränkung der vorliegenden Erfindung darstellt und ebenso auf andere Druckstufen übertragen werden kann.

Der erste Betriebszustand "*Offset P1 Standby*" betrifft einen Zustand der Anlage, in welchem keine Luft abgenommen wird, beispielsweise wird die Vorrichtung belüftet, die letzte herzustellende Flasche hat den Blasvorgang mit dem Druck P1 abgeschlossen oder die Vorrichtung dreht sich im Standby.

In einem zweiten Betriebszustand "*Offset P1 Produktion*" läuft die Produktion von Behältnissen an, ohne dass ein AirWizard (AW, Programm zur Steuerung und Regelung der Rückführung von Druckluft) verwendet werden. Der zweite Betriebszustand kann in drei Phasen unterteilt werden. In einer ersten Phase "PI Phase 1" werden die PI Kanäle (Ringkanäle unter Zwischenblasdrücken PI, Pi1, Pi2) angefüllt. Zunächst sind beim Anfahren der Vorrichtung die Zwischenblaskanäle Pi1 und Pi2 leer und werden durch das Recyclen der Druckluft nach dem Fertigblasen unter Druck P2 vorbefüllt. In dieser Phase werden zum Blasen der Behältnisse nur die Druckstufen P1 (Vorblasdruck) und P2 (Fertigblasdruck) verwendet.

In einer zweiten Phase "PI Phase 2" sind die Zwischenblaskanäle Pi1 und Pi2 vorbefüllt und bei Produktionsbeginn wird die Druckstufe PI (Zwischenblasdruck) neben der Rückgewinnung (Recycling) auch zum Blasen verwendet. Die Druckstufe PI wird also zwischen den Druckstufen P1 und P2 zugeschaltet. Ein Übergang von "PI Phase 1" in "PI Phase 2" erfolgt, sobald der Druck PI > X P2 ist, also der Druck PI größer als ein vorgegebener Bruchteil des Fertigblasdrucks P2 ist, bevorzugt größer als ein Drittel des Fertigblasdrucks P2. Es wären auch Werte zwischen 10 und 80 % des Fertigblasdrucks denkbar. Ist der Druck Pi < X P2, also keiner als ein vorgegebener Bruchteil des Fertigblasdrucks P2 verbleibt die Vorrichtung in Phase 1.

In einer dritten Phase "PI Phase 3" wird ein Recycling in den P1 Kanal freigegeben, sofern der Ringkanaldruck Pi1, nachdem dieser konstant geworden ist, immer noch größer ist als der Druck P1 und somit Luft zurückgewonnen werden kann. Ein Übergang von Phase 2 in Phase 3 erfolgt so bald PI > X P2 ist, PI konstant ist und Pi1 > P1 ist. Diese Phase liegt beispielsweise vor nachdem die ersten Behältnisse fertig geblasen wurden.

In einem dritten Betriebszustand "Offset P1 AirWizard" erfolgt die Produktion der Behältnisse gemäß der Phase 3 (siehe oben) des zweiten Betriebszustands, wobei die Regelung bzw. Steuerung der Druckverhältnisse in der Druckstufe P1 über den AirWizard erfolgt.

In den Tabellen der Figuren 2a und 2b sind die einzelnen Parameter bzw. Schritte zur Regelung der Druckverhältnisse in P1 für die verschiedenen Betriebszustände gezeigt. Das Regelziel ist in allen Fällen, dass eine Druckdifferenz im Ringkanal P1 zwischen einem vorgegebenen Sollwert und einem momentanen Ist-Wert minimal ist. Als Regeleingang werden in den ersten beiden Betriebszuständen der Sollwert (vorgegebener Wert) und der Istwert (Messwert) verwendet, während im dritten Betriebszustand zusätzlich die Recyclingzeit, insbesondere eine aktuelle und eine maximal(e) (mögliche) Recyclingzeit als Regeleingang verwendet werden. Unter der Recyclingzeit wir hierbei diejenige Zeit verstanden, in welcher das Ventil zum Schalten der P1 Druckstufe offen ist, um Druckluft aus dem Behältnis in den Ringkanal P1 zurückzuführen bzw. zu recyclen.

Das jeweilige Regelverhalten hängt davon ab, ob der entsprechende Ringkanal über- oder unterfüllt ist. So kann ich in einem ersten Betriebszustand "Offset P1 Standby" bei einer Unterfüllung der Druck um 0, 2 bar angehoben werden, wobei ein Regelintervall beispielsweise von 10s angewendet werden kann. Bei einer Überfüllung kann der Druck beispielsweise um 0,2 bar abgesenkt werden (einmalig) und einmalig über die Blasdüse der Druck abgelassen werden, wodurch sich der Druck von unten erneut einregeln kann. In einem Betriebszustand "Offset P1 Produktion" kann sowohl bei einer Unterfüllung als auch bei einer Überfüllung die Funktionsweise eines PID-Reglers angewendet werden.

Fig. 3 zeigt einen schematischen Ablauf einer Ausführungsform des erfindungsgemäßen Verfahrens, insbesondere ein Regelkreis für die Regelung des Drucks im Ringkanal P1 in dem dritten Betriebszustand.

In Abhängigkeit davon welche der Bedingungen B1, B2, B3 erfüllt sind wird das Verfahren mit dem Schritt S1 oder S3 fortgesetzt. Voraussetzung für beide Schritte ist die Bedingung B2, nämlich dass die Drücke in den PI-Ringkanälen (insb. Pi1 und Pi2) konstant sind. Ist der Druck Pi1 kleiner als P1 verbleibt die Vorrichtung in einem Schritt S1 in der oben beschriebenen Phase 2, wobei in einem Schritt S2 der Betriebsmodus "Offset P1 Standby" ausgewählt bzw. beibehalten wird.

Ist der Druck Pi1 größer als P1 (Bedingung B3 erfüllt), wird in einem Schritt S3 auf die oben beschriebene Phase 3 umgeschaltet. In einem Schritt S4 wird festgestellt, ob der Wert des Parameters "Offset AirWizard" (nachfolgend "Offset AirWizard" genannt) größer oder gleich dem Wert des Parameters "Offset Produktion" (nachfolgend "Offset Produktion" genannt) von -0,3 bar ist. Ist dies der Fall, so wird in einem Schritt S5 der Offset AirWizard auf den Wert des Offset Produktion nämlich auf -0,3 bar gesetzt. Ist dies nicht der Fall, so wird in einem Schritt S6 ein gespeicherter Offset AirWizard angewählt, was ein einmaliges Runtersteuerung beinhaltet, was zum Starten des Regelprozesses erforderlich ist. Mit anderen Worten wird bei dieser Kontrolle geprüft bzw. sichergestellt, dass der Offset Air Wizard mindestens 0,3 bar kleiner als der Offset Produktion ist. Ist dies der Fall, findet keine Änderung der Offset-Werte statt und werden lediglich übernommen bzw. angewendet. Ist der Offset aber zu hoch wird er einmalig auf ein Niveau gesenkt, welches 0,3 bar unter dem aktuellen Produktionsoffset liegt. So wird gewährleistet, dass die Regelung immer loslaufen kann.

In beiden Fällen wird das Verfahren mit dem Schritt S7 fortgesetzt wobei hierbei die Druckdifferenz geprüft wird, also die Abweichung des Ist-Drucks zu einem Solldruck (Ermittlung des charakteristischen Wertes). Hierbei sind zwei unterschiedliche Situationen denkbar. Zum einen kann die Messung ergeben, dass der Ist-Druck größer als der Solldruck ist (Situation "Ringkanal P1 überfüllt") oder dass der Ist-Druck geringer als der Solldruck ist (Situation "Ringkanal P1 unterfüllt").

Zunächst wird der Fall beschrieben, in welchem der Ringkanal P1 unterfüllt ist. Hierbei wird in einem Schritt S8 ermittelt, ob eine Recyclingzeit maximal ist. Ist dies nicht der Fall, wird in einem Schritt S9 die Recyclingzeit um einen gewissen Betrag vergrößert (im Bereich von X ms, Δ +X ms, beispielsweise bei kleinen Abweichungen X im Bereich weniger ms, bei gro-ßen Abweichungen X im Bereich von 5 bis 10 ms). Wird in einem weiteren Schritt S10 festgestellt, dass der Druck ansteigt (Erfassung Δ bar pro Δ Zeit) wird das Verfahren mit dem Schritt S7 fortgesetzt und erneut festgestellt, ob der Ringkanal P1 über- oder unterfüllt ist und der Regelkreis entsprechend fortgeführt.

Wir im Schritt S10 festgestellt, dass der Druck nicht ansteigt, wird in einem Schritt S11 festgestellt, ob sich innerhalb der letzten 10 ms eine Veränderung der Druckverhältnisse ergeben hat, insbesondere ob ein Druckanstieg verzeichnet wurde. Ist dies nicht der Fall kann beispielsweise der Bediener der Anlage in einem Schritt S12 informiert werden. Dieser Fall kann hierbei in der Situation entsprechen, dass das Recyclingpotential erschöpft ist (S13) und in einem weiteren Schritt S14 wird der Offset AirWizard um 0,1 bar (Δ +0,1 bar) angehoben und das Verfahren mit dem Schritt S7 fortgesetzt und die Druckdifferenz erneut bestimmt wird. Der Begriff "Setzen" in Figur 3 zwischen S10 und S11 bedeutet in diesem Zusammenhang, dass eine gewisse Trägheit des Systems berücksichtigt wird, bzw. es werden natürliche Druckschwankungen des Systems berücksichtigt. Hierbei soll sozusagen ein "Trend" aufgezeigt werden, auf den in Form von Regeleingriffen dann reagiert werden kann. Wäre dies nicht der Fall, würde der Regler ständig und relativ chaotisch seine Stellgrößen verändern.

Wird hingegen im Schritt S8 festgestellt, dass die Recyclingzeit bereits einen maximalen Wert aufweist, kann in einem Schritt S15 überprüft werde, ob gegebenenfalls noch restliches Recyclingpotential vorhanden ist und eine solche Information in einem Schritt S16 an den Bediener ausgegeben werden. Im nächsten Schritt wird in einem Schritt S14 wie oben beschrieben der Offset AirWizard um +0,1 bar angehoben und das Verfahren mit dem Schritt S7 fortgesetzt.

Im nächsten Teil wird nun die Situation beschrieben, in der im Schritt S7 festgestellt wird, dass der Ringkanal P1 überfüllt ist. In einem Schritt S17 wird der Offset AirWizard um 0,2 bar abgesenkt (Δ -0,2 bar). In einem Schritt S18 wird erfasst, ob ein Druckabfall erkennbar ist (Erfassung Δ bar pro Δ Zeit). Ist dies der Fall, so lässt dies einen Rückschluss darauf zu, dass die Überfüllung des P1 Ringkanals durch den Domregler bewirkt wird (und damit der Offset AirWizard zu hoch eingestellt war, S22) und das Verfahren kann mit dem Schritt S7 fortgesetzt werden.

Ist kein Druckabfall im Schritt S18 erkennbar, so bedeutet dies, dass die Überfüllung nicht durch den Domregler sondern durch das Recyclen verursacht wird (S19). In einem Schritt S20 wird der Offset AirWizard wieder zurückgeregelt (Δ +0,2 bar) und ein einem weiteren Schritt S21 die Recyclingzeit reduziert (im Bereich von X ms, Δ -X ms, beispielsweise bei kleinen Abweichungen X im Bereich weniger ms, bei großen Abweichungen X im Bereich von 5 bis 10 ms).

Der Regelkreis in Figur 3 zeigt weiterhin eine Verbindung zwischen "Ringkanal P1 überfüllt" und S11 mit dem Begriff "Rücksetzen". Wie oben bereits ausgeführt wird hierbei der Trägheit des Systems Rechnung getragen, bzw. werden hiermit (minimalste) Druckschwankungen definiert, auf welche der Regler noch nicht reagieren muss.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2a: Reservoir
- 7: Druckbereitstellungseinrichtung
- 10: Kunststoffvorformling
- 12: drehbarer Träger
- 15: Kunststoffbehältnis
- 20: Umformungsstation
- 30: Reduzierstation
- 32: erste Transporteinrichtung
- 34: zweite Transporteinrichtung
- 72: Verbindungsleitung
- 74: Drehverteiler
- 76: weiter Leitung
- 80: Ventilanordnung
- 82: Blasform
- 84: Beaufschlagungseinrichtung
- 88: Reckstange
- 98: Verbindungsleitung

- B1: Bedingung 1, Pi1 < P1
- B2: Bedingung 2, PI Drücke stabil
- B3: Bedingung 3, Pi1 > P1
- S1: Maschine bleibt in "Phase 2"
- S2: Auswahl bzw. Beibehalten Offset "Produktion"
- S3: Umschalten auf "Phase 3"
- S4: Offset AirWizard >= Offset Produktion 0,3 bar
- S5: Offset AirWizard = Offset Produktion -0,3 bar
- S6: Auswahl Offset AirWizard wie gespeichert
- S7: Prüfen Druckdifferenz
- S8: Recyclingzeit maximal?
- S9: Recyclingzeit vergrößern Δ + (variabel) ms
- S10: Druckanstieg erkennbar (variabel) bar pro Δ Zeit
- S11: keine Veränderung in den letzten 10ms Zunahme
- S12: Info an Bediener
- S13: Recyclingpotential erschöpft
- S14: Offset AirWizard anheben Δ +0,1 bar
- S15: gegebenenfalls noch restliches Recyclingpotential vorhanden
- S16: Info an Bediener
- S17: Offset AirWizard absenken Δ -0,2bar
- S18: Druckaball erkennbar Δ bar pro Δ Zeit
- S19: keine Frischluft mehr über Dom
- S20: Offset AirWizard wieder zurücknehmen Δ +0,2bar
- S21: Recyclingzeit reduzieren Δ - (variabel) ms
- S22: Dom unterstützt Speisung P1

## Patentansprüche

1. Verfahren zum Umformen von Kunststoffvorformlingen zu Kunststoffbehältnissen (15) mittels wenigstens einer Vorrichtung zum Umformen von Kunststoffvorformlingen zu Kunststoffbehältnissen, wobei Kunststoffvorformlinge mit einem fließfähigen und insbesondere gasförmigen Medium beaufschlagt werden und so zu den Kunststoffbehältnissen umgeformt werden, wobei die Kunststoffvorformlinge mit unterschiedlichen Druckniveaus (p1, Pi, p2) beaufschlagt werden und das fließfähige Medium in wenigstens zwei Reservoirs gespeichert wird und von diesen Reservoirs den Kunststoffvorformlingen zugeführt wird, wobei wenigstens eines dieser Reservoirs von einer Druckbereitstellungseinrichtung (7) mit dem fließfähigen Medium versorgt wird und wobei zumindest zeitweise das fließfähige Medium von dem Kunststoffbehältnis in wenigstens eines dieser Reservoirs zurückgeführt wird, wobei ein Druck in wenigstens einem Reservoir geregelt wird, und wobei ein Solldruck mit einem Ist-Druck in diesem Reservoir verglichen wird, und ein für diesen Vergleich charakteristischer Wert ermittelt wird,
**dadurch gekennzeichnet, dass**
auf Grundlage dieses charakteristischen Werts wenigstens eine erste Stellgröße und wenigstens eine zweite Stellgröße geregelt werden, wobei die wenigstens eine erste Stellgröße und die wenigstens zweite Stellgröße priorisiert geregelt werden.

2. Verfahren nach Anspruch 1,
**dadurch gekennzeichnet, dass**
es sich bei der wenigstens einen ersten Stellgröße um einen Offsetwert eines Drucks handelt, welcher auf den von der Druckbereitstellungseinrichtung und insbesondere auf den von einer Reduziereinrichtung bereitgestellten Druck addiert wird.

3. Verfahren nach wenigstens einem der vorangegangenen Ansprüche,
**dadurch gekennzeichnet, dass**
es sich bei der wenigstens einen zweiten Stellgröße um eine Zeit, insbesondere eine Recyclingzeit handelt, innerhalb welcher das fließfähige Medium von dem Kunststoffbehältnis in wenigstens eines dieser Reservoirs zurückgeführt wird.

4. Verfahren nach wenigstens einem der vorangegangenen Ansprüche,
**dadurch gekennzeichnet, dass**
die priorisierte Regelung der wenigstens einen ersten Stellgröße und der wenigstens einen zweiten Stellgröße in Abhängigkeit von einem Ist-Druck in diesem Reservoir erfolgt.

5. Verfahren nach dem vorangegangenen Anspruch,
**dadurch gekennzeichnet, dass**
die wenigstens eine erste Stellgröße priorisiert geregelt wird sobald der Ist-Druck in diesem Reservoir geringer als der Solldruck und/oder die wenigstens eine zweite Stellgröße priorisiert geregelt wird sobald der Ist-Druck in diesem Reservoir größer als der Solldruck ist.

6. Verfahren nach wenigstens einem der vorangegangenen Ansprüche,
**dadurch gekennzeichnet, dass**
ein Ergebnis der priorisierten Regelung der wenigstens einen ersten Stellgröße und/oder der wenigstens einen zweiten Stellgröße bewertet wird, wobei es sich bevorzugt bei dem Ergebnis um eine Auswirkung der Regelung auf den Ist-Druck in diesem Reservoir handelt.

7. Verfahren nach wenigstens einem der vorangegangenen Ansprüche,
**dadurch gekennzeichnet, dass**
die Regelung der wenigstens einen ersten Stellgröße und/oder der wenigstens einen zweiten Stellgröße in Abhängigkeit von einem vorgegebenen Betriebszustand der Vorrichtung erfolgt, wobei wenigstens zwei und bevorzugt wenigstens drei Betriebszustände der Vorrichtung vorgegeben sind und wobei in wenigstens einem vorgegebenen Betriebszustand der Vorrichtung die Regelung der wenigstens einen ersten Stellgröße und/oder der wenigstens einen zweiten Stellgröße priorisiert erfolgt.

8. Verfahren nach wenigstens einem der vorangegangenen Ansprüche,
**dadurch gekennzeichnet, dass**
der Ist-Druck mittels einer Druckmesseinrichtung gemessen wird und insbesondere mit einer in dem Reservoir angeordneten Druckmesseinrichtung.

9. Verfahren nach wenigstens einem der vorangegangenen Ansprüche,
**dadurch gekennzeichnet, dass**
bei der Regelung der wenigstens einen ersten Stellgröße ein aktueller Offsetwert und/oder ein unterer und/oder ein oberer Grenzwert des Offsetwerts berücksichtigt werden und/oder bei der Regelung der wenigstens einen zweiten Stellgröße eine aktuelle Recyclingzeit und/oder eine maximale Recyclingzeit berücksichtigt werden.

10. Verfahren nach wenigstens einem der vorangegangenen Ansprüche,
**dadurch gekennzeichnet, dass**
der für den Vergleich charakteristische Wert eine Differenz zwischen dem Ist-Druck und dem Solldruck oder ein Verhältnis zwischen dem Ist-Druck und dem Solldruck ist und/oder der Druck in dem wenigstens einen Reservoir mittels eines Domdruckreglers geregelt wird.

11. Verfahren nach wenigstens einem der vorangegangenen Ansprüche,
**dadurch gekennzeichnet, dass**
die Druckbereitstellungseinrichtung hinsichtlich der Höhe des von ihr ausgegebenen Druckes gesteuert wird und/oder der von der Druckbereitstellungseinrichtung bereitgestellte Druck von einer Reduzierstation auf den jeweiligen Reservoirdruck reduziert wird.

12. Vorrichtung (1) zum Umformen von Kunststoffvorformlingen (10) zu Kunststoffbehältnissen (15) mit wenigstens eine Umformungsstation (20), welche mittels einer Beaufschlagungseinrichtung (84) Kunststoffvorformlinge (10) mit einem fließfähigen und insbesondere gasförmigen Medium beaufschlagt und diese so zu den Kunststoffbehältnissen (15) umformt, wobei die Umformungsstation (20) die Kunststoffvorformlinge (10) mit unterschiedlichen Druckniveaus (p1, Pi, p2) beaufschlagt, wobei die Vorrichtung (1) wenigstens ein erstes Reservoir (2a) zum Speichern des fließfähigen Mediums unter einem ersten Druck und ein zweites Reservoir zum Speichern des fließfähigen Mediums unter einem zweiten Druck aufweist und wenigstens eine Zuführeinrichtung (98) vorgesehen ist, welche das fließfähige Medium von diesen Reservoirs den Kunststoffvorformlingen (10) zuführt und zumindest zeitweise das fließfähige Medium von den Kunststoffbehältnissen (20) in wenigstens eines dieser Reservoirs zurückführt und weiterhin eine Druckbereitstellungseinrichtung (7) vorgesehen ist, welche wenigstens eines dieser Reservoirs (2a) mit dem fließfähigen Medium versorgt, wobei der Druck in wenigstens einem Reservoir regelbar ist, und wobei ein Solldruck mit einem Ist-Druck in diesem Reservoir vergleichbar ist, und ein für diesen Vergleich charakteristischer Wert ermittelbar ist,
**dadurch gekennzeichnet, dass**
der von der Druckbereitstellungseinrichtung ausgegebene Druck steuerbar ist und/oder die Vorrichtung eine Reduzierstation (30) aufweist, welche den von der Druckbereitstellungseinrichtung an dieses Reservoir zugeführten Druck regelt.

13. Vorrichtung (1) nach wenigstens einem der vorangegangenen Ansprüche,
**dadurch gekennzeichnet, dass**
die Vorrichtung (1) wenigstens ein erstes Stellglied aufweist, welche wenigstens eine erste Stellgröße ausgibt, wobei es sich bei dem wenigstens einen ersten Stellglied um einen Domdruckdruckregler der Reduzierstation und insbesondere um ein Proportionalventil des Domdruckreglers und/oder der Reduzierstation handelt und wobei es sich bei der ersten Stellgröße um einen von der Reduzierstation bereitgestellten Druck des fließfähigen Mediums handelt.

14. Vorrichtung (1) nach wenigstens einem der vorangegangenen Ansprüche,
**dadurch gekennzeichnet, dass**
die Umformungsstation eine Ventilanordnung mit einer Vielzahl von Ventilen aufweist, um die Behältnisse mit unterschiedlichen Druckstufen zu beaufschlagen und die Vorrichtung wenigstens ein zweites Stellglied aufweist, welche wenigstens eine zweite Stellgröße ausgibt, wobei es sich bei dem wenigstens einen zweiten Stellglied um ein Ventil der Ventilanordnung der Umformungsstation handelt und wobei es sich bei der wenigstens einen zweiten Stellgröße um eine Zeit, insbesondere eine Recyclingzeit handelt, innerhalb welcher das fließfähige Medium aus dem Kunststoffbehältnis in wenigstens eines dieser Reservoirs zurückgeführt wird.

15. Vorrichtung (1) nach wenigstens einem der vorangegangenen Ansprüche,
**dadurch gekennzeichnet, dass**
die Vorrichtung eine Vergleichseinrichtung aufweist, welche dazu geeignet ist, einen Soll-Druck in einem Reservoir mit einem Ist-Druck in diesem Reservoir zu vergleichen und einen für diesen Vergleich charakteristischen Wert auszugeben und bevorzugt eine Regeleinrichtung den Druck in diesem Reservoir basierend auf diesem charakteristischen Wert regelt.
